# EUROPÄISCHE PATENTSCHRIFT

(11) **EP 1 361 365 B1**
(45) Veröffentlichungstag und Bekanntmachung des Hinweises auf die Patenterteilung: **10.08.2005**
(21) Anmeldenummer: 03016590.6
(22) Anmeldetag: 24.09.1999
(51) Int. Cl.: F04C 18/344

(54) **Vakuumpumpe und Kunststoffrotor**
Vacuum pump and plastic rotor
Pompe à vide et rotor en matière plastique

(30) Priorität: 30.09.1998 DE 29823809 U
(43) Veröffentlichungstag der Anmeldung: 12.11.2003
(62) Teilanmeldung aus: 99947419.0
(73) Patentinhaber: Luk Automobiltechnik GmbH & Co. KG, 42499 Hückeswagen (DE)
(72) Erfinder: Otto, Dieter, 58256 Ennepetal (DE)
(74) Vertreter: Brisch, Georg

(56) Entgegenhaltungen:
- DE-A- 2 727 328
- GB-A- 620 901
- US-A- 2 287 369
- US-A- 4 080 123
- US-A- 5 429 084
- PATENT ABSTRACTS OF JAPAN vol. 009, no. 003 (M-349), 9. Januar 1985 (1985-01-09) -& JP 59 155595 A (MATSUSHITA DENKI SANGYO KK), 4. September 1984 (1984-09-04)

## Beschreibung

Die Erfindung betrifft eine Vakuumpumpe, insbesondere für Bremskraftverstärker-Anlagen in Kraftfahrzeugen, gemäß Oberbegriff des Anspruchs 1.

Vakuumpumpen der hier angesprochenen Art sind bekannt. Sie weisen einen aus Metall, meist aus Sintermetall bestehenden Rotor auf, der von einer Antriebswelle in Rotation versetzbar ist. Der in einem Gehäuse angeordnete Rotor steht mit einem Flügel in Eingriff, der an einem Konturring entlanggleitet. Der Rotor besteht aus mehreren Einzelteilen, die lösbar miteinander verbunden sind. Es hat sich gezeigt, daß der Rotor aufgrund seines Gewichts ein großes Massenträgheitsmoment aufweist, wodurch die Leistungsaufnahme der Vakuumpumpe unerwünscht hoch ist. Der Rotor weist ferner eine massive und aufwendige Bauweise auf.

Aus der Patentschrift US 2,287,369 ist eine Flügelpumpe bekannt, die einen antreibbaren Rotor aufweist, über den Flügel in einem Gehäuse in Rotation versetzbar sind. Die Flügel sind innerhalb eines Schlitzes verlagerbar.

Aus der Offenlegungsschrift DE 27 27 328 A1 ist ein Hydro-Aggregat aus thermoplastischem Kunststoff bekannt, das einen drehbar gelagerten Rotor aufweist. Im Umfang des Rotors sind schlitzförmige Ausnehmungen vorgesehen, in die Schieber eingeführt werden können. Die drehbare Lagerung des Rotors erfolgt über angespritzte Zapfen, die auf beiden Stirnflächen des Rotors auf der Drehachse angeordnet sind.

Aus der Offenlegungsschrift DE 39 09 831 A1 ist eine trockenlaufende Vakuumpumpe bekannt, die einen auf einer Motorwelle drehfest angeordneten Drehkolben umfasst. Antriebsseitig des Drehkolbens ist über eine Zwischenscheibe ein weiterer Drehkolben vorgesehen, dem wiederum antriebsseitig eine weitere Zwischenscheibe zugeordnet ist. Jeder der Drehkolben ist auf der Welle des Antriebsmotors über je eine aus einem elastischen Werkstoff bestehende Passfeder in radialer Richtung drehfest und in axialer Richtung schwimmend gelagert. Die Passfedem verbinden die jeweiligen Drehkolben drehfest mit der Welle.

Es ist daher Aufgabe der Erfindung, eine Vakuumpumpe zu schaffen, die die Eingangs genannten Nachteile nicht aufweist.

Zur Lösung dieser Aufgabe wird eine Vakuumpumpe vorgeschlagen, die die in Anspruch 1 genannten Merkmale aufweist. Diese zeichnet sich dadurch aus, daß der Rotor aus Kunststoff besteht und einstückig ausgebildet ist. Der Rotor ist in einfacher und kostengünstiger Weise herstellbar, beispielsweise im Spritzgußverfahren, und weist im Vergleich zu den bekannten Rotoren ein geringeres Gewicht auf. Aufgrund der einstückigen Ausbildung des Rotors ist eine kompakte Bauweise möglich, so daß der Bauraum für die Vakuumpumpe verkleinert werden kann. Die Leistungsaufnahme der Vakuumpumpe ist aufgrund des kleinen Massenträgheitsmoments des Rotors relativ gering.

Es wird ein Ausführungsbeispiel der Vakuumpumpe bevorzugt, bei dem der Rotor mindestens einen randoffenen Hohlraum aufweist. Bei der bevorzugten Herstellung des Rotors im Spritzgußverfahren kann der Hohlraum beziehungsweise die Hohlräume in einfacher Weise durch das Einlegen entsprechend ausgebildeter Kerne in das Spritzgußwerkzeug hergestellt werden. Durch das Einbringen von Hohlräumen in den Rotor können dünne Wandungen, beispielsweise nach außen hin und zu einem Schlitz, in dem der Flügel verlagerbar ist, realisiert werden. Ferner kann das Gewicht des ohnehin leichten, weil aus Kunststoff bestehenden Rotors weiter verringert werden.

Bevorzugt wird auch ein Ausführungsbeispiel der Vakuumpumpe, das sich dadurch auszeichnet, daß der Wandstärkenverlauf des Rotors stetig oder im wesentlichen stetig ist. Das heißt, der Übergang zwischen zwei eine unterschiedliche Dicke aufweisenden Wandbereiche ist gleichmäßig und weist keine deutlichen Wandstärkensprünge auf.

Auch wird ein Ausführungsbeispiel der Vakuumpumpe bevorzugt, bei dem der Rotor mindestens zwei nebeneinander angeordnete Hohlräume aufweist, die durch eine Rippe voneinander getrennt sind. Die Formsteifigkeit des Rotors wird durch die Verrippung weiter erhöht. Die zwischen zwei Hohlräumen gebildete Rippe ist vorzugsweise dünner als die anderen Wandungen des Rotors. Hierdurch werden Einfallstellen im Übergangsbereich der Rippe und einer Wandung des Rotors vermieden. Die Dicke der Rippe beziehungsweise der Rippen liegt bei einem bevorzugten Ausführungsbeispiel im Bereich von 1,0 mm bis 2,0 mm, während die Wandungsdicken des Rotors im Vergleich dazu dann vorzugsweise im Bereich von 1,5 mm bis 3,0 mm liegen.

Besonders bevorzugt wird auch eine Ausführungsform der Vakuumpumpe, die sich dadurch auszeichnet, daß der Rotor mindestens eine quer oder im wesentlichen quer zur Längsmittelachse des Rotors verlaufende geschlossene Wand aufweist. Dadurch kann sichergestellt werden, daß bei einem Hohlräume aufweisenden Rotor keine Luft von der Antriebsseite durch den Rotor in die Vakuumpumpe gelangen kann. Es sind also keine zusätzlichen Dichtungen notwendig.

Bei einem bevorzugten Ausführungsbeispiel der Vakuumpumpe ist vorgesehen, daß der Rotor ein mit einer Antriebswelle zusammenwirkendes elastisches Antriebselement aufweist. Durch das Antriebselement, das über eine Kupplung oder direkt mit dem Rotor in Eingriff steht, werden die von der mit beispielsweise der Brennkraftmaschine eines Kraftfahrzeugs gekoppelten Antriebswelle übertragenen Drehmomentspitzen beziehungsweise -schwingungen, wie sie zum Beispiel bei Direkteinspritzer-Motoren auftreten, gedämpft, so daß ein Bruch des Rotors mit hoher Sicherheit vermieden wird.

Bei einer vorteilhaften Ausführungsform wird das zum Beispiel aus Blech, vorzugsweise Federblech, bestehende Antriebselement als Torsionsstab ausgebildet, der sich unter dem eingeleiteten Drehmoment verdrillt. So können zum Beispiel bei einem Ausführungsbeispiel, bei dem der Rotor von der Brennkraftmaschine des Kraftfahrzeugs angetrieben wird, auftretende Drehmomentspitzen, wie sie zum Beispiel bei der Inbetriebnahme (Kaltstart) der Vakuumpumpe und/oder in Zusammenhang mit Direkteinspritzer-Motoren auftreten, geglättet und deutlich reduziert werden.

Schließlich wird auch ein Ausführungsbeispiel der Vakuumpumpe bevorzugt, das sich dadurch auszeichnet, daß das Antriebselement in einen Schlitz in der Antriebswelle hineinragt und in diesem verschieblich geführt ist. Hierdurch kann in vorteilhafter Weise ein Achsversatz zwischen der Vakuumpumpe und der Antriebswelle ausgeglichen werden, ohne daß dazu eine Kupplung benötigt wird. Ein Ausgleich eines Achsversatzes senkrecht zum Schlitz kann bei einer festen Verbindung des Antriebselements mit dem Rotor durch ein Verbiegen des Antriebselements im elastischen Bereich ausgeglichen werden. Ist das Antriebselement lose mit dem Rotor verbunden, so daß es gegenüber dem Rotor eine Relativbewegung ausführen kann, wird ein Achsversatz senkrecht zum Schlitz durch ein Verkippen des Antriebselements ausgeglichen.

Nach einer Weiterbildung der Erfindung ist vorgesehen, daß der Rotor mit Hilfe der Brennkraftmaschine eines Kraftfahrzeugs antreibbar ist. Bei einem anderen Ausführungsbeispiel der Vakuumpumpe ist der Rotor durch einen Motor, insbesondere Elektromotor, antreibbar, auch dann, wenn die Vakuumpumpe in einem Kraftfahrzeug eingesetzt ist, beispielsweise im Zusammenhang mit einer Bremskraftverstärker-Anlage des Kraftfahrzeugs. Der Motor kann beispielsweise auch hydraulisch oder pneumatisch betrieben sein. Bei einer weiteren Ausführungsvariante ist der Rotor wahlweise von der Brennkraftmaschine oder dem Motor antreibbar.

Weitere vorteilhafte Ausgestaltungen ergeben sich aus den übrigen Unteransprüchen.

Die Erfindung wird im folgenden anhand der Zeichnung näher erläutert. Es zeigen:
- Figur 1: drei Abbildungen eines ersten Ausführungsbeispiels eines einseitig gelagerten Rotors einer Vakuumpumpe;
- Figuren 2 bis 7: jeweils eine Seitenansicht und eine Stimansicht weiterer Ausführungsbeispiele des Rotors;
- Figuren 8A und 8B: jeweils eine Draufsicht auf die dem Antrieb abgewandte Stirnseite weiterer Ausführungsbeispiele des Rotors;
- Figur 9: eine Seitenansicht eines weiteren Ausführungsbeispiels des Rotors;
- Figuren 10A bis 10C: jeweils eine Draufsicht auf die antriebsseitige Stirnseite von mehreren Ausführungsbeispielen eines über eine Kupplung angetriebenen Rotors;
- Figur 11: eine Seitenansicht eines Rotors mit einem Antriebszapfen, der mit einer Kappe versehen ist;
- Figur 12: ein stark vergrößerter Ausschnitt des Rotors gemäß Figur 11 im Bereich des Antriebszapfens;
- Figuren 13 und 14: jeweils einen Längsschnitt und eine Draufsicht auf die antriebsseitige Stirnseite zweier Ausführungsbeispiele eines ein Antriebselement aufweisenden Rotors;
- Figur 15: eine Draufsicht auf ein Ausführungsbeispiel des Antriebselements;
- Figur 16: eine Draufsicht auf das in Figur 15 dargestellte Antriebselement im eingebauten Zustand;
- Figur 17: einen stark vergrößerten Ausschnitt eines Endbereichs eines vierten Ausführungsbeispiels des Antriebselements;
- Figur 18: einen Ausschnitt eines Rotors im Bereich des Grunds einer Ausnehmung für das Antriebselement;
- Figur 19: eine Draufsicht auf die in Figur 18 dargestellte Ausnehmung;
- Figur 20: einen Ausschnitt eines weiteren Ausführungsbeispiels eines Antriebselements in dessen Endbereich;
- Figur 21: eine Draufsicht auf die antriebsseitige Stirnseite eines weiteren Ausführungsbeispiels des Rotors;
- Figur 22: eine Draufsicht auf einen Endbereich eines weiteren Ausführungsbeispiels des Antriebselements und
- Figur 23: drei Abbildungen eines weiteren Ausführungsbeispiels des erfindungsgemäßen Rotors.

Allen im folgenden beschriebenen Ausführungsbeispielen des Rotors für eine Vakuumpumpe ist gemeinsam, daß dieser einstückig ausgebildet ist und aus Kunststoff besteht. Der Rotor ist in vorteilhafter Weise im Spritzgußverfahren herstellbar und weist ein nur geringes Gewicht auf.

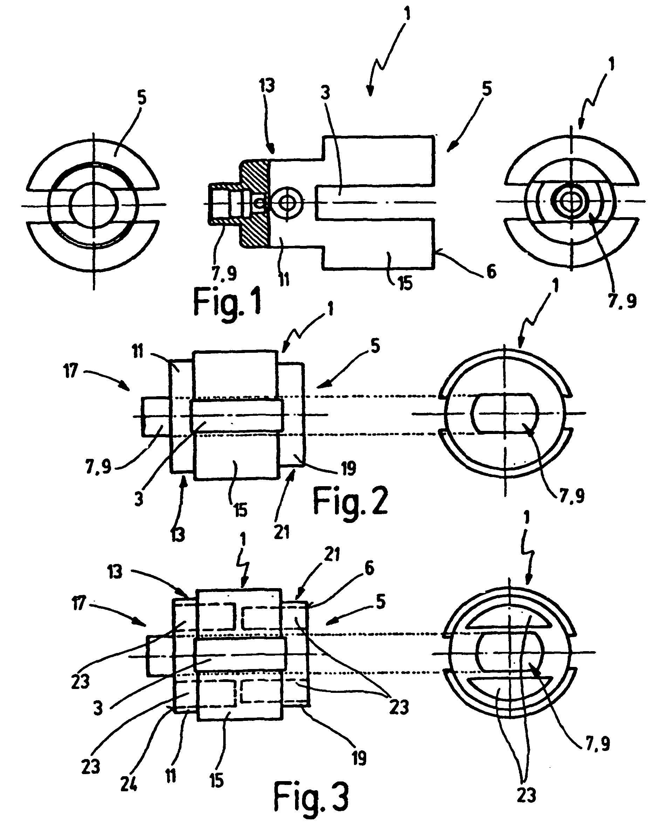

Figur 1 zeigt drei Abbildungen eines ersten Ausführungsbeispiels des Rotors 1 einer nicht dargestellten Vakuumpumpe, der mit einem durchgehenden Schlitz 3 versehen ist. Der Schlitz 3 dient zur Aufnahme eines nicht dargestellten Flügels, der innerhalb des Schlitzes 3 in Durchmesserrichtung verlagerbar ist. Der Schlitz 3 ist bei diesem Ausführungsbeispiel von der dem Antrieb des Rotors 1 abgewandten Stirnseite 5 aus in eine Stirnfläche 6 eingebracht, ist also randoffen ausgebildet. Als Antrieb dient üblicherweise eine mit einem Drehmoment beaufschlagbare Antriebswelle. Die Außenfläche des Rotors 1 ist zylindrisch ausgebildet.

Ein erster Längsabschnitt 7 des Rotors ist als Zweiflach 9 ausgebildet, an dem ein von der nicht dargestellten Antriebswelle übertragenes Drehmoment auf den Rotor 1 aufgebracht wird. An den ersten Längsabschnitt 7 schließt sich ein zweiter Längsabschnitt 11 an, der einen größeren Außendurchmesser aufweist, als der erste Längsabschnitt 7. Der zweite Längsabschnitt 11 dient als Lager 13 des hier fliegend gelagerten Rotors 1. Als Lagerungsart ist vorzugsweise eine Gleitlagerung vorgesehen. An das Lager 13 schließt sich ein durchmessergrößerer dritter Längsabschnitt 15 an, der -in radialer Richtung gesehen- vom Schlitz 3 für den Flügel durchbrochen ist.

Figur 2 zeigt eine Seitenansicht und eine Vorderansicht auf die antriebsseitige Stirnseite 17 eines weiteren Ausführungsbeispiels des Rotors 1, der zwei Lager aufweist. Auch bei der beidseitigen Lagerung des Rotors wird eine Gleitlagerung bevorzugt. Der zweite Längsabschnitt 11 des Rotors 1 bildet das erste Lager 13 und ein sich an den dritten Längsabschnitt 15 anschließender vierter Längsabschnitt 19 bildet das zweite Lager 21. Beide Lager 13, 21 weisen Durchmesser auf, die nur geringfügig, vorzugsweise 1 mm bis 5 mm, kleiner sind als der Durchmesser des Rotors im Bereich des Schlitzes 3 für den Flügel, der in dem dritten Längsabschnitt 15 eingebracht ist. Die Außendurchmesser der Lager 13 und 21 sind hier unterschiedlich und können bei einem anderen Ausführungsbeispiel auch identisch sein.

Die beidseitige Lagerung des Rotors 1 weist gegenüber der einseitigen Lagerung sowohl Funktionsvorteile als auch Vorteile bei der Herstellung auf. Die Funktionsvorteile.bestehen darin, daß der Rotor nicht im Lager beziehungsweise den Lagern verkantet, wie es bei einem einseitig gelagerten Rotor bisweilen vorkommt. Des weiteren ist eine kompakte Bauform des Rotors realisierbar, weil beide Lager sehr kurz ausgeführt werden können. Ferner weist ein beidseitig gelagerter Rotor eine hohe Formstabilität auf. Aufgrund der hohen Formstabilität des Rotors können bei der Fertigung des Rotors enge Toleranzen eingehalten werden.

Figur 3 zeigt zwei Abbildungen eines weiteren Ausführungsbeispiels des Rotors 3, der sich von dem anhand der Figur 2 beschriebenen Rotor lediglich dadurch unterscheidet, daß zur Gewichtsreduzierung Hohlräume im Rotor vorgesehen sind. Auf der dem Antrieb zugewandten Stirnseite 17 des Rotors 1 sind in die Stirnfläche 24 des Lagers 13 und auf der dem Antrieb abgewandten Stirnseite 5 in die Stirnfläche 6 jeweils zwei Hohlräume 23 eingebracht, die einen kreisabschnittsförmigen Querschnitt aufweisen, wie aus der rechten Abbildung der Figur 3 ersichtlich. In der linken Abbildung der Figur 3 ist zu erkennen, daß sich die Hohlräume 23 bis in den mittleren Bereich des Rotors beziehungsweise des dritten Längsabschnitts 15 erstrecken. Der zwischen den gegenüberliegend angeordneten Hohlräumen stehengebliebene Wandbereich weist eine nur geringe Dicke auf. Ferner sind durch die Hohlräume Wandungen gebildet, zum Beispiel die Außenwand des Rotors im Bereich der Lager 13 und 21, die nur eine geringe Dicke aufweisen. Auch die Wandungen zwischen dem Schlitz 3 für den Flügel und den Hohlräumen sind relativ dünn. Die Form der Hohlräume ist variierbar und kann auch kreisrund oder oval sein. Wichtig ist, daß durch das Einbringen der Hohlräume dünne Wandungen geschaffen werden, so daß das Gewicht des Rotors reduziert wird. Der Übergang zwischen zwei Wandungen, die eine unterschiedliche Dicke aufweisen, ist vorzugsweise stufenlos.

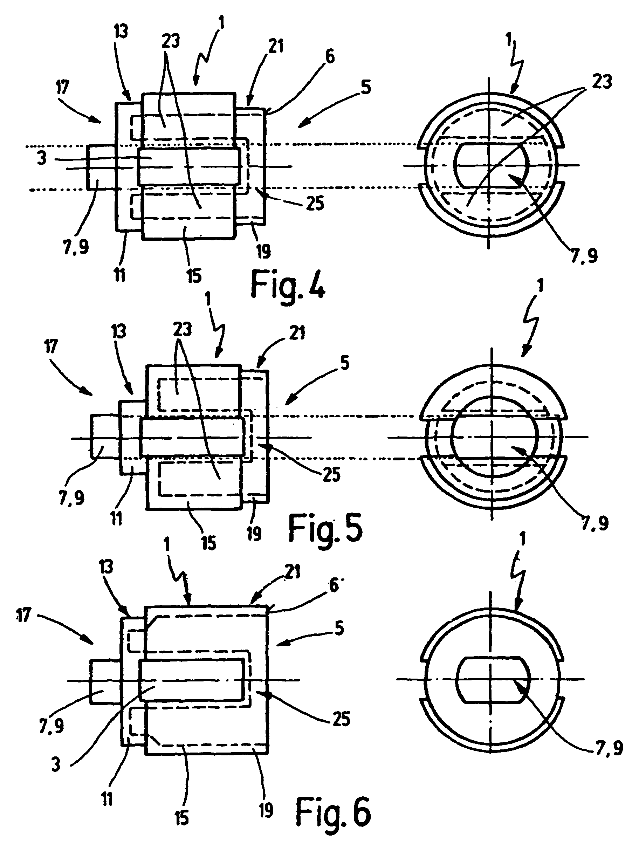

Figur 4 zeigt eine Seitenansicht und eine Draufsicht auf die antriebsseitige Stirnseite 17 eines weiteren Ausführungsbeispiels des Rotors, bei dem ausschließlich auf der dem Antrieb abgewandten Stirnseite 5 Hohlräume 23 eingebracht sind. In die Stirnfläche 6 ist eine kreisförmige Vertiefung 25 eingebracht, die sich in ihrem mittleren Bereich bis unmittelbar an den Schlitz 3 erstreckt. In den Grund der Vertiefung 25 sind kreisabschnittsförmige Hohlräume 23 eingebracht, die sich bis in den zweiten Längsabschnitt 11, also durch den gesamten Rotor bis hin zum ersten Lager 13, erstrecken. Allen Ausführungsbeispielen ist gemeinsam, daß wenn nur von einer Stirnseite aus Hohlräume in diesen eingebracht werden, die der Antriebsseite abgewandte Stirnseite 5 des Rotors bevorzugt wird.

Bei dem in Figur 5 dargestellten Ausführungsbeispiel des Rotors 1 weist das antriebsseitig angeordnete Lager 13 einen Durchmesser auf, der deutlich kleiner ist, als der Durchmesser des Rotors 1 im Bereich des Schlitzes 3, also im dritten Längsabschnitt 15. Es hat sich gezeigt, daß durch den kleinen Außendurchmesser des Lagers 13 ein kleiner Zentrierdurchmesser der Vakuumpumpe realisierbar ist. Das zweite, der Antriebsseite abgewandte Lager 21 ist hier im Durchmesser nur geringfügig kleiner als der Rotor 1 im Bereich des Flügels 3. Die Hohlräume 23 und die Vertiefung 25 sind auch hier von der Stirnseite 5 in den Rotor 1 eingebracht.

Figur 6 zeigt zwei Abbildungen eines weiteren Ausführungsbeispiels des Rotors, bei dem der Durchmesser des zweiten Lagers 21 und der des dritten Längsabschnitts 15, in dem der Schlitz 3 für den Flügel eingebracht ist, identisch ist. Der Vorteil hierbei ist, daß durch die auf der Stirnseite 5 in die Stirnfläche 6 eingebrachte Vertiefung 25 und die sich daran anschließenden Hohlräume 23 eine extrem dünne und technisch optimale Wandstärke im Außenbereich des Rotors möglich ist. Diese liegt bei einem aus Kunststoff bestehenden Rotor vorzugsweise in einem Bereich von 1,5 mm bis 3,0 mm. Selbstverständlich ist es auch möglich, daß beide Lager 13, 21 den gleichen Durchmesser wie der Rotor 1 im Flügelschlitzbereich aufweisen. Denkbar ist auch, daß nur das erste, antriebsseitig angeordnete Lager 13 den gleichen Durchmesser wie der Rotor im Bereich des den Schlitz 3 aufweisenden dritten Längsabschnitts 15 aufweist, während das zweite Lager 21 einen kleineren Durchmesser besitzt.

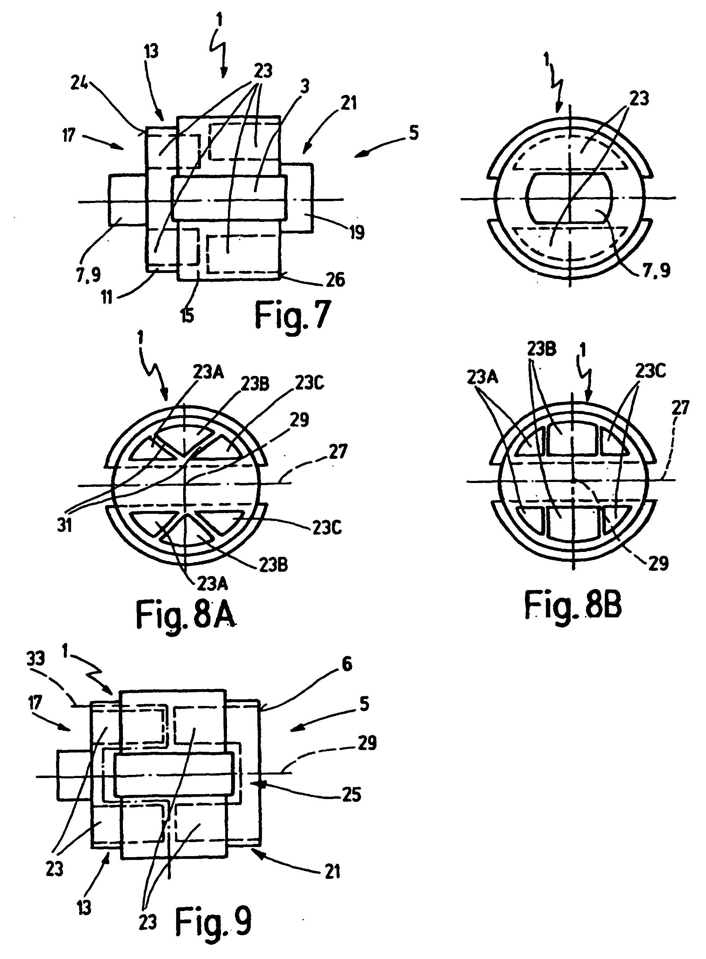

Bei dem in Figur 7 dargestellten Ausführungsbeispiel eines Rotors 1 weist das zweite Lager 21, das auf der dem Antrieb abgewandten Stirnseite 5 des Rotors 1 vorgesehen ist, einen Durchmesser auf, der wesentlich kleiner ist als der Durchmesser des Rotors 1 im Bereich seines dritten Längsabschnitts 15. Um dünne Wandungen zu schaffen, sind in die Stirnfläche 24 des zweiten Längsabschnitts 11 und in die Stirnfläche 26 des dritten Längsabschnitts 15 jeweils zwei Hohlräume 23 eingebracht, die -wie aus der rechten Abbildung der Figur 7 ersichtlich- einen kreisabschnittsförmigen Querschnitt aufweisen. Aufgrund dieser Ausgestaltung können in dem Bereich zwischen dem Rotoraußendurchmesser im Bereich des dritten Längsabschnitts 15 und im Bereich des zweiten Lagers 21 dünne Wandungen realisiert werden.

Figur 8A zeigt eine Vorderansicht auf die dem Antrieb abgewandten Stirnseite 5 eines Ausführungsbeispiels des Rotors 1, von der aus mehrere Hohlräume eingebracht sind. Der Rotor 1 ist symmetrisch zu einer Querachse 27 ausgebildet, die senkrecht zur Längsmittelachse 29 des Rotors 1 verläuft. Es werden im folgenden daher lediglich die Hohlräume oberhalb der Querachse 27 beschrieben. Die insgesamt drei Hohlräume 23A, 23B und 23C sind in einem geringen Abstand nebeneinander angeordnet. Der Hohlraum 23B ist von den Hohlräumen 23A und 23C jeweils durch eine Rippe 31 getrennt, die von einer Wandung des einstückig ausgebildeten Rotors 1 gebildet ist. Die Rippen 31 erhöhen die Formsteifigkeit des Rotors 1 und sind vorzugsweise dünner als die anderen Wandungen des Rotors, um Einfallsstellen, also Verjüngungen oder Einschnürungen, in den Wandbereichen zu vermeiden, in denen die Rippen in die übrigen Wandbereiche des Rotors 1 übergehen. Aufgrund der Anordnung und der Ausgestaltung der Hohlräume 23A bis 23C weisen diese gemeinsam eine Kreisabschnittsform auf, wobei aufgrund der V-förmigen Anordnung der Rippen 31 der mittlere Hohlraum 23B einen kreisausschnittsförmigen Querschnitt aufweist. Durch die Form der Hohlräume sind auch hier dünne Wandungen, insbesondere in den außenliegenden Bereichen des Rotors, realisiert.

Das in Figur 8B dargestellte Ausführungsbeispiel des Rotors 1 unterscheidet sich von dem anhand der Figur 8A beschriebenen lediglich dadurch, daß die Rippen 31 hier in einem Abstand und parallel zueinander angeordnet sind. Es wird deutlich, daß die Anordnung der Rippen variierbar ist und vorzugsweise in Abhängigkeit der geforderten Steifigkeitseigenschaften festgelegt wird.

Figur 9 zeigt eine Seitenansicht eines weiteren Ausführungsbeispiels des Rotors 1, von dessen Stirnseiten 17 und 5 aus Hohlräume 23 beziehungsweise eine Vertiefung 25 und sich daran anschließende Hohlräume 23 in die Lager 13 und 21 eingebracht sind. Die Hohlräume 23 erstrecken sich bis in den mittleren Bereich des Rotors. Der Rotor 1 weist eine gedachte, im wesentlichen quer zu seiner Längsmittelachse 29 verlaufende geschlossene Wand 33 auf, deren Verlauf mit gestrichelter Linie dargestellt ist. Die Wand 33 erstreckt sich -quer zur Längserstreckung des Rotors gesehen- über den gesamten Rotorquerschnitt und beinhaltet hier das erste, der Antriebsseite zugewandte Lager 13. Dadurch wird sichergestellt, daß trotz der Hohlräume 23 von der Antriebsseite keine Luft durch den Rotor 1 in die Vakuumpumpe gelangen kann.

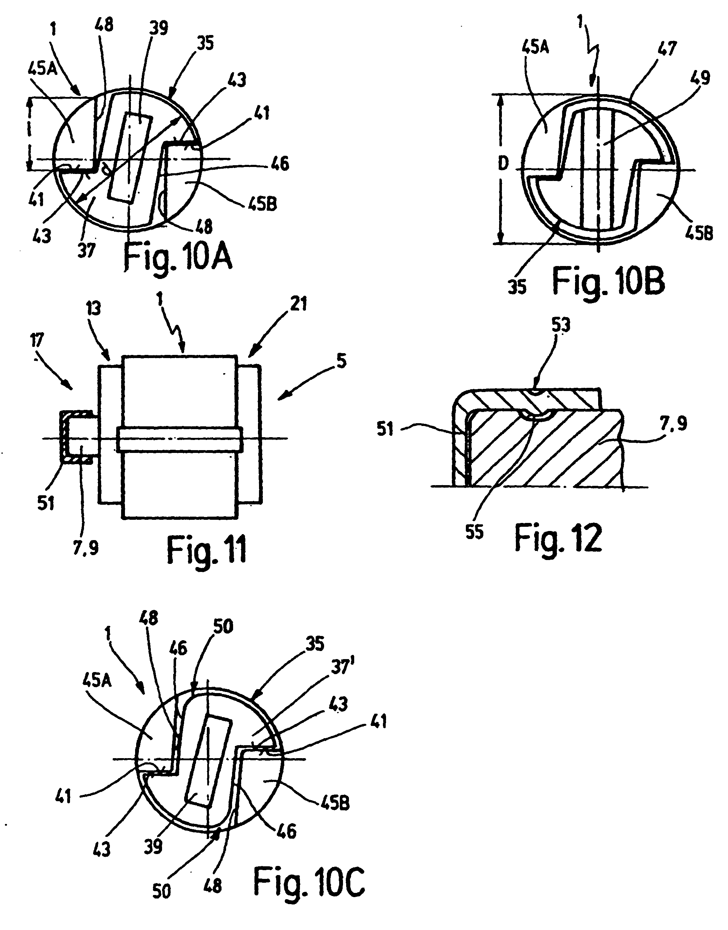

Allen Ausführungsbeispielen des Rotors 1 ist gemeinsam, daß der Rotor entweder direkt oder über eine Kupplung von der Antriebswelle in Rotation versetzt werden kann. Welche der beiden Antriebsmöglichkeiten jeweils zum Einsatz kommt, hängt unter anderem von der Größe des Antriebsmoments, der Drehungleichförmigkeit der Antriebswelle und einem möglichen Achsversatz zwischen dem Rotor und der Antriebswelle ab. Im folgenden werden anhand der Figuren 10A und 10B, die jeweils eine Draufsicht auf die der Antriebswelle zugewandten Stirnseite 17 zeigen, zwei Ausführungsbeispiele einer Kupplung näher beschrieben.

Die in Figur 10A dargestellte Kupplung 35 ist von einer Scheibe 37 gebildet, in deren mittleren Bereich ein rechteckiges Langloch 39 eingebracht ist, das die Scheibe 37 durchdringt. Das Langloch 39, in das die Antriebswelle mit einem entsprechend ausgebildeten Abschnitt eingreift, ermöglicht einen Ausgleich eines Achsversatzes zwischen der Vakuumpumpe und der Antriebswelle. Die Scheibe ist vorzugsweise derart ausgebildet, daß sie durch Stanzen hergestellt werden kann. Die einen kreisförmigen Querschnitt aufweisende Scheibe 37 weist zwei auf gegenüberliegenden Seiten in den Umfang eingebrachte Aussparungen auf, wodurch jeweils eine Auflagefläche 41 gebildet ist, die vorzugsweise -wie in Figur 10A dargestellteben ist. Zur Übertragung eines Drehmoments von einer Antriebswelle auf den Rotor 1 ist jede Auflagefläche 41 an einer am Rotor 1 vorgesehenen Gegenfläche 43 andrückbar. Aus Figur 10A ist ersichtlich, daß die Form der Aussparung so gewählt ist, daß trotz kleinem Durchmesser d der Scheibe 37 die Anlageflächen zwischen dem Rotor 1 und der Kupplung groß sind. Aufgrund der großen Anlageflächen ist die Flächenpressung in diesen Bereichen klein, so daß auf ein Härten der Kupplung, falls diese aus Stahl oder Sintereisen besteht, gegebenenfalls verzichtet werden kann. Bei einem bevorzugten Ausführungsbeispiel ist vorgesehen, daß das Verhältnis zwischen der Dicke b und dem Durchmesser d der Scheibe 37 in einem Bereich von 0,1 ≤ b/d ≤ 0,3 liegt.

Die Gegenflächen 43 befinden sich an jeweils einem einstückig mit dem Rotor verbundenen Antriebssegment 45A beziehungsweise 45B, die über die Stirnfläche 24 des ersten Lagers 13 domartig her vorstehen. Der Abstand zwischen den Antriebssegmenten 45A, 45B sowie deren Form ist so gewählt, daß die Kupplung mit Spiel zwischen den Antriebssegmenten angeordnet und in einem kleinen Winkelbereich um ihre Längsmittelachse schwenkbar ist. Der Rotor 1 weist in seinem Antriebsbereich eine sehr stabile Form auf. Dies ist insbesondere dadurch möglich geworden, da hier eine sehr große Stützlänge I der Antriebssegmente 45A und 45 B in Kraftrichtung realisiert ist. So wird vorzugsweise ein Verhältnis zwischen der Stützlänge I und dem Durchmesser D des Rotors 1 realisiert, das in einem Bereich von 0,35 ≤ I/D ≤ 0,65 liegt.

Bei dem in Figur 10B dargestellten Ausführungsbeispiel des Rotors sind die Antriebssegmente 45A, 45B durch einen geschlossenen Ring 47 miteinander verbunden, wodurch die Formsteifigkeit des Rotors 1 erhöht werden kann. Ferner kann der Ring 47 auch als Lager, insbesondere zur Gleitlagerung, für den Rotor benutzt werden. Diese Ausführungsform des Rotors baut in axialer Richtung sehr kompakt.

Bei der in Figur 10B dargestellten Ausführungsvariante der Kupplung 35 ist in deren mittleren Bereich anstelle eines Langlochs ein Zweiflach 49 vorgesehen, der in einen entsprechend ausgebildeten Schlitz in der Antriebswelle eingreift. Über den Zweiflach 49 wird das Drehmoment von der Antriebswelle auf die Kupplung übertragen.

Figur 10C zeigt eine Draufsicht auf die Stirnseite 17 des anhand von Figur 10A beschriebenen Rotors 1 in einer weiteren Ausführungsform einer Kupplung 35, die von einer Scheibe 37' gebildet ist. Gleiche Teile sind mit gleichen Bezugszeichen versehen, so daß zu deren Beschreibung auf Figur 10A verwiesen wird. In den Umfang der Scheibe 37' sind zwei identische Aussparungen eingebracht, wodurch jeweils eine ebene Auflagefläche 41 und eine dazu rechtwinklig oder im wesentlichen rechtwinklig zur Auflagefläche 41 verlaufende Seitenwand 46 gebildet ist. Wie aus Figur 10C ersichtlich, sind bei anliegenden Auflageflächen 41 der Scheibe 37' an den Gegenflächen 43 des Rotors die Seitenwände 46 parallel zu einer in einem Abstand angeordneten Teilwand 48 des Antriebssegments 45A beziehungsweise 45B angeordnet, während bei dem in Figur 10A dargestellten Ausführungsbeispiel in dieser Stellung der Kupplung die Seitenwände 46 gegenüber den Teilwänden 48 der Antriebssegmente geneigt sind beziehungsweise mit diesen einen spitzen Winkel einschließen. Die Übergänge 50 zwischen den Seitenwänden 46 und der Umfangsfläche der Scheibe 37' sind bei diesem Ausführungsbeispiel abgerundet und weisen keine scharfen Kanten auf. Sollten im Betrieb der Vakuumpumpe Drehmomentschwingungen auftreten, wie sie zum Beispiel bei Direkteinspritzer-Motoren entstehen können, was zu einem Anschlagen der Scheibe 37' im Bereich ihrer Übergänge 50 an den Antriebssegmenten 45A, 45B führt, wird ein Beschädigen der Teilwände 80 der aus Kunststoff bestehenden Antriebssegmente vermieden.

Figur 11 zeigt ein anhand der vorangegangenen Figuren beschriebenes Ausführungsbeispiel des Rotors 1, der einen ersten, als Zweiflach 9 ausgebildeten Längsabschnitt 7 aufweist. Der zapfenförmige Zweiflach 9 ist mit einer topfförmigen, vorzugsweise aus Blech bestehenden Kappe 51 versehen, die auf den Zweiflach aufgepreßt oder aufgeklipst werden kann. Es ist auch möglich, daß die Kappe bereits beim Spritzen des Rotors in die Gußform eingelegt wird und somit bei der Herstellung des Rotors unlösbar mit diesem verbunden wird. Die Kappe 51 schützt den Zweiflach 9, dessen Festigkeit zum Übertragen des erforderlichen Drehmoments ausreicht, vor einem Verschleiß, der durch eine Relativbewegung zwischen dem Zweiflach und einer Kupplung oder bei einem direkten Antrieb des Rotors, das heißt ohne Kupplung, zwischen dem Zweiflach und der Antriebswelle hervorgerufen wird.

Figur 12 zeigt einen stark vergrößerten Ausschnitt der auf den ersten Längsabschnitt 7 aufgebrachten Kappe 51, die mindestens eine Druckstelle 53 aufweist, wodurch auf der Innenseite der Kappe 51 eine Vorwölbung gebildet ist, die in eine im Zweiflach des Rotors 7 eingebrachte Vertiefung 55 formschlüssig eingreift. Hierdurch kann die elastische und/oder aus einem elastischen Material bestehende Kappe 51 in einfacher Weise auf den Zweiflach 9 aufgeklipst werden.

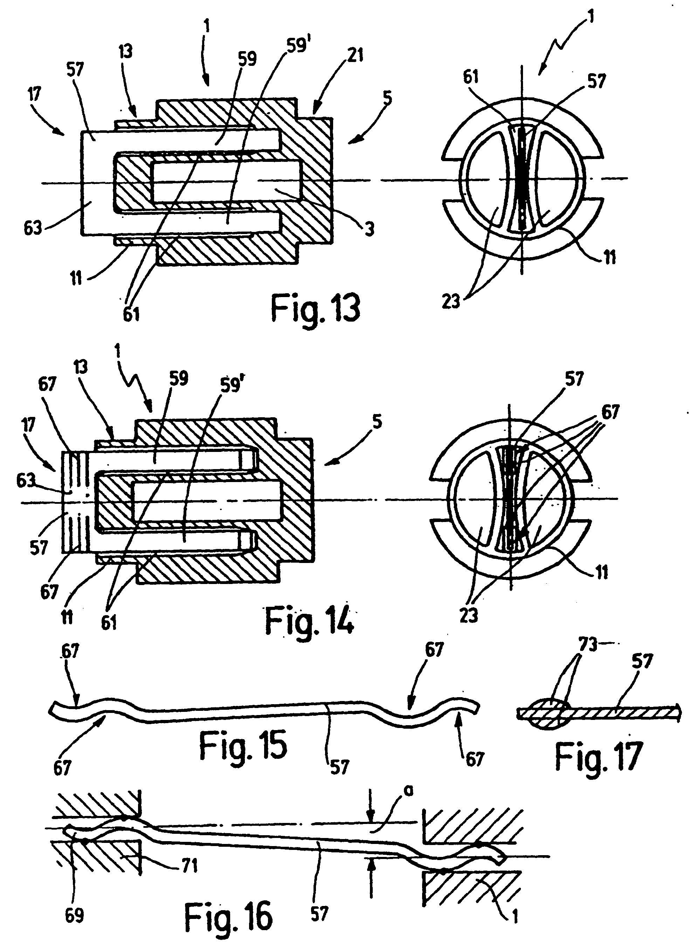

Figur 13 zeigt einen Längsschnitt und eine Draufsicht auf die antriebsseitige Stirnseite 17 eines weiteren Ausführungsbeispiels eines Rotors 1, der einstückig ausgebildet ist und aus Kunststoff besteht. Der Rotor 1 umfaßt hier ein mit der nicht dargestellten Antriebswelle zusammenwirkendes elastisches Antriebselement 57, das zum Beispiel aus Metallblech, vorzugsweise Federblech, besteht. Die Schenkel 59 und 59' des U-förmigen Antriebselements 57 sind in jeweils eine Ausnehmung 61 im Rotor 1 eingebracht. Die Endbereiche der beiden Schenkel sind in den Rotor 1 eingegossen, wodurch das Antriebselement 57 unlösbar mit dem Rotor 1 verbunden ist. Die Ausnehmungen 61 erstrecken sich von der Stirnfläche 24 des ersten Lagers 13 bis über den mittleren Bereich des Rotors hinaus, wobei die Größe der Ausnehmungen so gewählt ist, daß die Schenkel 59, 59' sich im Bereich der Ausnehmungen relativ gegenüber dem Rotor bewegen können. Der die Schenkel 59, 59' verbindende Abschnitt 63 des einstückigen Antriebselements 57 ragt über die Stirnfläche 24 hinaus. Die Anordnung der Ausnehmungen 61 ist so gewählt, daß die Schenkel 59, 59' einen großen Bereich des Schlitzes 3, in dem der Flügel der Vakuumpumpe geführt ist, umschließen. Aufgrund dieser Ausgestaltung wird das Antriebsmoment hier direkt in die Bereiche des Rotors eingeleitet, an denen sich der im Schlitz 3 verschieblich gelagerte Flügel der Vakuumpumpe abstützt.

Im montierten Zustand der Vakuumpumpe greift das Antriebselement 57 mit seinem Abschnitt 63 in einen Schlitz in der Antriebswelle ein. Bei einer Rotation der Antriebswelle wird das Antriebsmoment über das Antriebselement 57 in den Rotor eingeleitet, wobei das elastische Antriebselement 57 auftretende Drehmomentspitzen glättet.

Bei dem in Figur 14 dargestellten Ausführungsbeispiel weisen die Schenkel 59, 59' in ihren Endbereichen jeweils zwei Druckstellen 67 auf, wodurch auf der einen Seite des Antriebselements eine konvexe und auf der anderen Seite eine konkave Wölbung gebildet wird. Die Druckstellen in den Schenkeln 59, 59' sind auf verschiedenen Seiten des Antriebselements eingebracht, so daß auch die konvexen Wölbungen der Schenkel sich auf verschiedenen Seiten des Antriebselements befinden. Die konvexen Wölbungen in den Schenkelenden dienen dazu, die beiden Schenkel 59, 59' in den Ausnehmungen 61 zu verklemmen, so daß das Antriebselement 57 sicher am beziehungsweise im Rotor gehalten wird. Die zum Einbringen der Schenkel in die Ausnehmungen erforderliche Anpreßkraft ist relativ gering. Damit der in einen Schlitz der Antriebswelle eingreifende Abschnitt 63 des Antriebselements 57 auch in diesen Schlitz spielfrei anordenbar ist, weist der Abschnitt 63 auf jeder Seite des Antriebselements jeweils zwei Druckstellen 67 auf, in deren Bereich das Antriebselement eine konkave beziehungsweise konvexe Wölbung aufweist. Durch die beidseitig angebrachten Druckstellen 67 wird bei einer pendelnden Bewegung des Antriebselements 57, zum Beispiel in Folge von Drehmomentschwingungen, ein Hin- und Herschlagen der Schenkel in den Ausnehmungen und des Abschnitts 63 in dem Schlitz der Antriebswelle verhindert, da das Antriebselement 57 in diesen Bereichen mit beiden Seiten in den Ausnehmungen beziehungsweise dem Schlitz anliegt.

Figur 15 zeigt eine Seitenansicht eines weiteren Ausführungsbeispiels eines langgestreckten Antriebselements 57, das an seinen Enden auf gegenüberliegenden Seiten jeweils zwei Druckstellen 67 aufweist, wodurch konkav und konvex gekrümmte Bereiche gebildet werden. Mit Hilfe des elastischen Antriebselements 57 kann -wie aus Figur 16 ersichtlich- ein Achsversatz a zwischen der Vakuumpumpe und der Antriebswelle ausgeglichen werden, ohne daß dazu eine Kupplung notwendig ist. Wie in Figur 16 dargestellt, ragt das Antriebselement 57 hierzu in einen Schlitz 69 einer Antriebswelle 71. Das andere Ende des Antriebselements 57 ragt in einen Schlitz oder in eine Ausnehmung im Rotor 1. Aufgrund dieser Ausgestaltung kann in Längserstreckung des Schlitzes 69 ein Achsversatz ausgeglichen werden, indem das Antriebselement 57 im Schlitz 69 verlagert wird. Ein Achsversatz senkrecht zur Längserstreckung des Schlitzes 69 wird bei einem fest mit dem Rotor verbundenen Antriebselement dadurch erreicht, daß dieses im elastischen Bereich gebogen wird. Ist das Antriebselement mit Spiel im Schlitz oder der Ausnehmung des Rotors geführt, so kippt dieses bei Übertragung des Drehmoments gegen eine Wandung des Schlitzes. In Figur 16 sind die Anlagebereiche des Antriebselements 57 an den Wandungen der Schlitze in der Antriebswelle und im Rotor mit Punkten angedeutet.

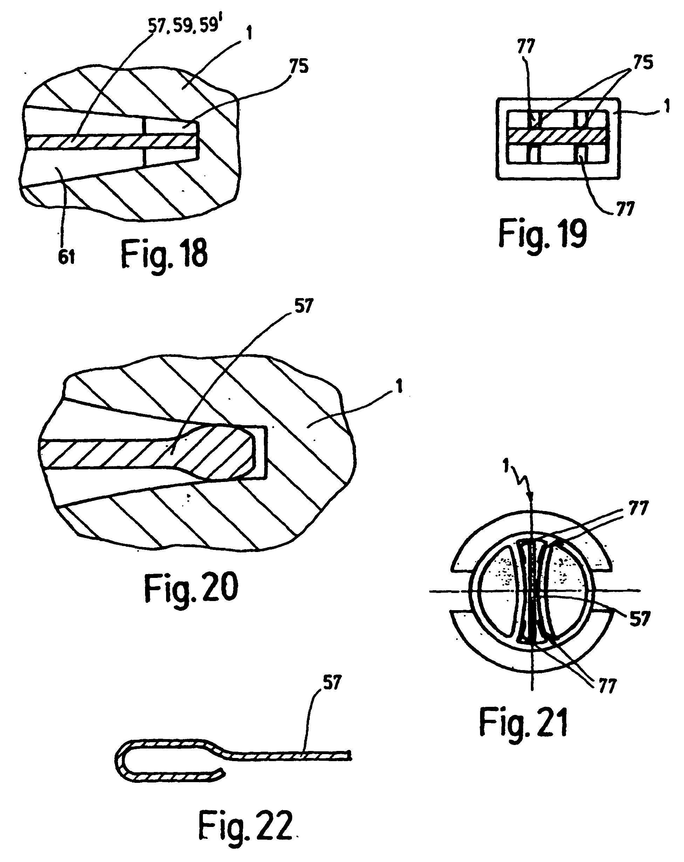

Alternativ zu dem in Figur 15 dargestellten Ausführungsbeispiel des Antriebselement 57 kann dieses anstelle der Druckstellen 67 in seinem Endbereich -wie in Figur 17 dargestellt- auch ballige Flächenabschnitte 73 aufweisen, die auf beiden Seiten des Antriebselements 57 durch einen Materialauftrag gebildet werden oder mit dem Antriebselement 57 einstückig verbunden sind. Dadurch wird sichergestellt, daß das Antriebsmoment nicht über die Kanten des dünnen Antriebselements 57 übertragen wird, sondern über Flächen.

Figur 18 zeigt einen Ausschnitt eines Rotors 1 im Bereich einer Ausnehmung 61 für die Schenkel 59, 59' des U-förmigen Antriebselements, in deren Grund eine Aufnahme 75 zur Klemmbefestigung der Endbereiche der Schenkel vorgesehen sind. Wie aus Figur 19 sichtlich, die eine Draufsicht auf die Ausnehmungen 61 im Rotor zeigt, ist für jeden Schenkel des Antriebselements 57 eine Aufnahme 75 vorgesehen, die jeweils durch einen Steg 77 gebildet sind, der einen Schlitz aufweist, in den ein Schenkel des Antriebselements eingepreßt ist.

Figur 20 zeigt einen mit Spiel in eine Ausnehmung 61 im Rotor 1 eingestecktes Antriebselement 57, das einen Achsversatz durch ein Verkippen ausgleichen kann. Das Antriebselement 57 ist in seinem Anlagebereich auf beiden Seiten ballig ausgebildet, das heißt, das Antriebselement weist an seinem Endbereich auf beiden Seiten eine konvexe Wölbung auf. Besonders vorteilhaft bei dem in Figur 20 dargestellten Ausführungsbeispiel ist, daß durch das Verkippen des Antriebselements bei einem Achsversatz dennoch keine zusätzliche Lagerkraft entsteht, sondern daß nur das Drehmoment in den Rotor eingeleitet wird. Die balligen Endbereiche des Antriebselements 57 verhindern, daß das Drehmoment nicht über Kanten, sondern über ballige Flächen übertragen wird.

Die das Antriebselement 57 aufnehmenden Ausnehmungen 61 im Rotor 1 sind vorzugsweise so gestaltet, daß das sich unter Last verformende Antriebselement 57 im Rotor an einem Anschlag zur Anlage kommt, bevor der Bereich plastischer Verformung erreicht wird. Hierzu sind bei dem in Figur 21 dargestellten Ausführungsbeispiel des Rotors 1 mehrere Anschlagflächen 77 vorgesehen, die auf beiden Seiten des Antriebselements 57 angeordnet sind.

Figur 22 zeigt einen Endbereich eines Ausführungsbeispiels des Antriebselements 57, das hier zweifach abgewinkelt ist, wodurch es in vorteilhafter Weise an unterschiedlich große Schlitze in der Antriebswelle und dem Rotor angepaßt werden kann.

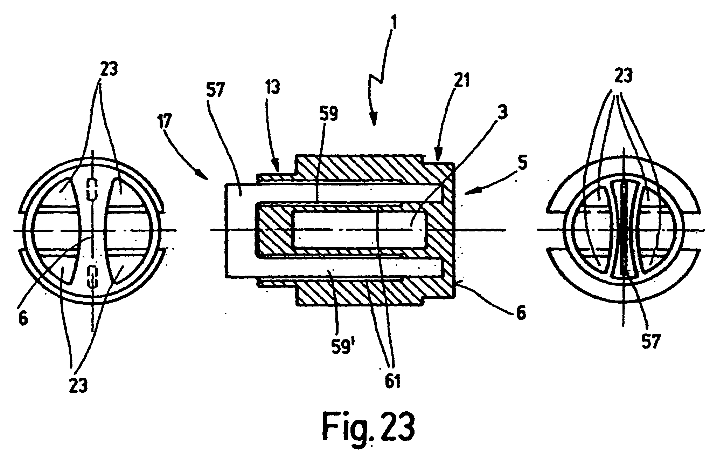

Figur 23 zeigt drei Abbildungen eines weiteren Ausführungsbeispiels des Rotors 1, der ein anhand der vorangegangenen Figuren beschriebenes Antriebselement 57 und mehrere, von beiden Stirnseiten 5 und 17 eingebrachte Hohlräume 23 aufweist, die zur Gewichtsreduzierung des Rotors dienen. Wie aus den Abbildungen der Figur 23 ersichtlich, weisen die Wandungen des Rotors 1 kunststoffgerechte Stärken auf. Die Schenkel 59, 59' des Antriebselements 57 sind hier so lang, daß sie den Schlitz 3 für den Flügel vollständig umgeben und bis zum zweiten Lager 21 reichen. Die Schenkelenden sind vom Rotormaterial vollständig umgeben und daher unlösbar mit dem Rotor verbunden. Aufgrund dieser Ausgestaltung wird das Antriebsmoment unmittelbar in das dem Antrieb abgewandten Ende des Rotors eingeleitet, so daß die übrigen Bereiche des Rotors 1 zumindest im wesentlichen spannungsfrei sind.

Zusammenfassend bleibt festzuhalten, daß durch die Herstellung des Rotors aus Kunststoff die Kosten für die Vakuumpumpe deutlich verringert werden können. Der Kunststoffrotor weist gegenüber aus Metall bestehenden Rotoren nur ein geringes Gewicht auf, das durch das Einbringen von mindestens einem Hohlraum weiter verringert wird. Die Hohlräume können bei einem im Spritzgußverfahren hergestellten Rotor durch das Einlegen von Kernen in die Gußform gebildet oder nach der Herstellung des Rotors aus diesem spanend herausgearbeitet werden. Die Form, Ausgestaltung und die Anzahl der Hohlräume ist variierbar und wird beispielsweise durch das auf den Rotor aufbringbare Antriebsmoments festgelegt. Ferner kann jede Hohlräume aufweisende Ausführungsform des Rotors mit Versteifungsrippen 31 versehen sein, wie sie anhand der Figuren 8A und 8B beschrieben sind.

Da die Vakuumpumpe auch in Bereichen angeordnet werden kann, in denen hohe Temperaturen herrschen, zum Beispiel im Motorraum eines Kraftfahrzeugs, wird der Rotor bei einem bevorzugten Ausführungsbeispiel aus einem Kunststoff hergestellt, dessen Dauerfestigkeit vorzugsweise mindestens bis 80°C gewährleistet werden kann. Selbstverständlich können auch solche Kunststoffe Verwendung finden, die mindestens bis zu 140°C und darüber ihre Festigkeitseigenschaften, zumindest im wesentlichen, nicht verlieren.

Unabhängig von der konstruktiven Ausgestaltung des Rotors kann dieser entweder direkt von der Antriebswelle oder über eine Kupplung angetrieben werden. Die Ausführungsformen des Rotors, bei denen keine Kupplung vorgesehen beziehungsweise erforderlich ist, werden bevorzugt, da durch den Wegfall der Kupplung die Kosten für die Vakuumpumpe verringert werden können. Bei einem Direktantrieb des Rotors wird die Ausführungsform bevorzugt, die ein anhand der Figuren beschriebenes Antriebselement aufweist, das Drehmomentspitzen und -schwingungen abschwächt und glättet. Dadurch kann auch dann ein kompakt bauender Rotor mit nur geringen Wanddicken realisiert werden, wenn das Antriebsmoment hoch ist.

Aus den Figuren ist ersichtlich, daß lediglich die Ausführungsformen des Rotors, die weder über eine Kupplung noch ein oben beschriebenes elastisches Antriebselement angetrieben werden, einen ersten Längsabschnitt 7 aufweisen, der vorzugsweise als Zweiflach ausgebildet ist.

## Patentansprüche

1. Vakuumpumpe, insbesondere für Bremskraftverstärker-Anlagen in Kraftfahrzeugen, mit einem antreibbaren Rotor (1), über den ein Flügel in einem Gehäuse in Rotation versetzbar ist, wobei der Rotor (1) aus Kunststoff besteht und einstückig ausgebildet ist, **dadurch gekennzeichnet, dass** der Rotor (1) mindestens eine Antriebsfläche (43) aufweist, die sich an einem an der antriebsseitigen Stirnfläche (24) des Rotors (1) angeordneten Antriebssegment (45A; 45B) befindet und im Abstand zur Drehachse des Rotors (1) verläuft.

2. Vakuumpumpe nach Anspruch 1, **dadurch gekennzeichnet, dass** der vorzugsweise im Spritzgußverfahren hergestellte Rotor (1) mindestens einen randoffenen Hohlraum (23) aufweist.

3. Vakuumpumpe nach Anspruch 2, **dadurch gekennzeichnet, dass** der Hohlraum (23,23A,23B,23C) vorzugsweise von der antriebsseitigen Stirnseite (17) des Rotors (1) oder von dessen dem Antrieb abgewandten Stirnseite (5) eingebracht ist.

4. Vakuumpumpe nach einem der vorhergehenden Ansprüche, **dadurch gekennzeichnet, dass** der Rotor (1) mindestens zwei Hohlräume (23,23A,23B,23C) aufweist, die jeweils von einer Stirnseite (5,17) des Rotors (1) eingebracht sind, und dass der Rotor (1) mindestens eine quer oder im wesentlichen quer zur Längsmittelachse (29) des Rotors (1) verlaufende, geschlossene Wand aufweist, die die Hohlräume (23,23A,23B,23C) in axialer Richtung voneinander trennt.

5. Vakuumpumpe nach Anspruch 4, **dadurch gekennzeichnet, dass** sich Hohlräume (23,23A,23B,23C) in axialer Richtung bis in den mittleren Bereich des Rotors (1) erstrecken.

6. Vakuumpumpe nach einem der vorhergehenden Ansprüche, **dadurch gekennzeichnet, dass** die Wandungen des Rotors (1) eine geringe Dicke aufweisen.

7. Vakuumpumpe nach einem der vorhergehenden Ansprüche, **dadurch gekennzeichnet, dass** der Übergang zwischen zwei eine unterschiedliche Dicke aufweisenden Wandbereichen des Rotors (1) stetig, vorzugsweise stufenlos, ist.

8. Vakuumpumpe nach einem der vorhergehenden Ansprüche, **dadurch gekennzeichnet, dass** der Rotor (1) mindestens ein Lager (13,21) aufweist, dessen Durchmesser kleiner, vorzugsweise nur geringfügig kleiner ist, als der Rotordurchmesser im Bereich eines Schlitzes (3), in dem der Flügel verlagerbar ist.

9. Vakuumpumpe nach einem der Ansprüche 1 bis 7, **dadurch gekennzeichnet, dass** der Rotor (1) mindestens ein Lager (21) aufweist, dessen Durchmesser gleich groß ist, wie der Rotordurchmesser im Bereich eines Schlitzes (3), in dem der Flügel verlagerbar ist.

10. Vakuumpumpe nach einem der vorhergehenden Ansprüche, **dadurch gekennzeichnet, dass** der Rotor (1) zwei Lager (13,21) aufweist und dass der Durchmesser mindestens eines der Lager (21,13) kleiner, vorzugsweise wesentlich kleiner, als der Rotordurchmesser im Bereich des Schlitzes (3) ist.

11. Vakuumpumpe nach einem der vorhergehenden Ansprüche, **dadurch gekennzeichnet, dass** der Rotor (1) zwei Lager (13, 21) aufweist und dass der Durchmesser des Lagers (21) kleiner ist als der Durchmesser des Lagers (13).

12. Vakuumpumpe nach einem der vorhergehenden Ansprüche, **dadurch gekennzeichnet, dass** der Rotor (1) mindestens zwei nebeneinander angeordnete Hohlräume (23A;23B;23C) aufweist, die durch eine Rippe (31) voneinander getrennt sind.

13. Vakuumpumpe nach einem der vorhergehenden Ansprüche, **dadurch gekennzeichnet, dass** die Form der Hohlräume (23A;23B; 23C) oval ist.

14. Vakuumpumpe nach Anspruch 12, **dadurch gekennzeichnet, dass** die Rippe (31) dünner als die übrigen Wandbereiche des Rotors (1) ist.

15. Vakuumpumpe nach einem der vorhergehenden Ansprüche, **dadurch gekennzeichnet, dass** der Rotor (1) über eine von einer Scheibe (37) gebildeten Kupplung (35) mit einem Drehmoment beaufschlagbar ist.

16. Vakuumpumpe nach einem der vorhergehenden Ansprüche, **dadurch gekennzeichnet, dass** das Verhältnis zwischen der Dicke (b) und dem Durchmesser (d) der Scheibe (37) im Bereich von 0,1 ≤ b/d ≤ 0,3 liegt.

17. Vakuumpumpe nach einem der vorhergehenden Ansprüche, **dadurch gekennzeichnet, dass** eine Gegenfläche (43) für eine Kupplung sich an einem über die antriebsseitige Stirnfläche des Rotors (1) hervorstehenden Antriebssegment (45A;45B) befindet.

18. Vakuumpumpe nach Anspruch 17, **dadurch gekennzeichnet, dass** das Verhältnis zwischen der Stützlänge (I) des Antriebssegments (45A;45B) und dem Durchmesser (D) des Rotors (1) im Bereich von 0,35 ≤ I/D ≤ 0,65 liegt.

19. Vakuumpumpe nach einem der vorhergehenden Ansprüche, **dadurch gekennzeichnet, dass** mindestens zwei Antriebssegmente (45A;45B) vorgesehen sind, die durch einen geschlossenen Ring (47) miteinander verbunden sind.

20. Vakuumpumpe nach einem der vorhergehenden Ansprüche, **dadurch gekennzeichnet, dass** der Ring (47) auch als Lager, insbesondere zur Gleitlagerung für den Rotor benutzt werden kann.

21. Vakuumpumpe nach einem der vorhergehenden Ansprüche, **dadurch gekennzeichnet, dass** die Kupplung ein Langloch (39), in das eine Antriebswelle eingreift, oder einen Antriebszapfen, vorzugsweise Zweiflach (49), der in einen entsprechenden Schlitz in der Antriebswelle eingreift, aufweist.

22. Vakuumpumpe nach einem der vorhergehenden Ansprüche, **dadurch gekennzeichnet, dass** ein erster, vorzugsweise als Zweiflach (9) ausgebildeter Längsabschnitt (7) des Rotors (1) mit einer topfförmigen, vorzugsweise aus Blech bestehenden Kappe (51) versehen ist.

23. Vakuumpumpe nach einem der vorhergehenden Ansprüche, **dadurch gekennzeichnet, dass** der Rotor (1) ein mit einer Antriebswelle zusammenwirkendes elastisches Antriebselement (57) aufweist.

24. Vakuumpumpe nach einem der vorhergehenden Ansprüche, **dadurch gekennzeichnet, dass** das Antriebselement (57) aus Metallblech, vorzugsweise Federblech, besteht.

25. Vakuumpumpe nach einem der vorhergehenden Ansprüche, **dadurch gekennzeichnet, dass** das Antriebselement in einen Schlitz (69) in der Antriebswelle (71) hineinragt und in diesem verschieblich geführt ist.

26. Vakuumpumpe nach einem der vorhergehenden Ansprüche, **dadurch gekennzeichnet, dass** das Antriebselement in eine schlitzförmige Ausnehmung (61) im Rotor eingreift.

27. Vakuumpumpe nach Anspruch 26, **dadurch gekennzeichnet, dass** das Antriebselement (57) in der Ausnehmung (61) unverschieblich gehalten ist.

28. Vakuumpumpe nach einem der vorhergehenden Ansprüche 1 bis 25, **dadurch gekennzeichnet, dass** das Antriebselement (57) in den Rotor (1) eingebettet ist.

29. Vakuumpumpe nach einem der vorhergehenden Ansprüche, **dadurch gekennzeichnet, dass** das Antriebselement (57) U-förmig ausgebildet ist.

30. Vakuumpumpe nach einem der vorhergehenden Ansprüche, **dadurch gekennzeichnet, dass** bei einer Beaufschlagung des Antriebselements (57) mit einem Drehmoment dieses an mindestens einem Abschnitt (Anschlagfläche (77)) der Ausnehmung (61) anliegt.

31. Vakuumpumpe nach Anspruch 28, **dadurch gekennzeichnet, dass** das Antriebselement (57) im Anlagebereich ballig ausgebildet ist.

32. Vakuumpumpe nach einem der vorhergehenden Ansprüche, **dadurch gekennzeichnet, dass** der Rotor mindestens einen Anschlag für das Antriebselement aufweist.

33. Vakuumpumpe nach einem der vorhergehenden Ansprüche, **dadurch gekennzeichnet, dass** das Antriebselement an seinem in die Ausnehmung im Rotor eingreifenden Ende abgewinkelt ist.

34. Vakuumpumpe nach einem der vorhergehenden Ansprüche, **dadurch gekennzeichnet, dass** der Rotor (1) mit Hilfe der Brennkraftmaschine eines Kraftfahrzeugs und/oder durch einen Motor, insbesondere Elektromotor, antreibbar ist.

35. Vakuumpumpe nach einem der vorhergehenden Ansprüche, **dadurch gekennzeichnet, dass** der Rotor mindestens einen durchgehenden Schlitz für einen Flügel aufweist.

36. Vakuumpumpe nach einem der vorhergehenden Ansprüche, **dadurch gekennzeichnet, dass** die Außenfläche des Rotors zylindrisch ausgebildet ist.

37. Vakuumpumpe nach einem der vorhergehenden Ansprüche, **dadurch gekennzeichnet, dass** das/die Lager als Gleitlager ausgebildet ist/sind.

38. Vakuumpumpe nach einem der vorhergehenden Ansprüche, **dadurch gekennzeichnet, dass** die Kupplung mit Spiel zwischen den Segmenten angeordnet ist.

39. Vakuumpumpe nach einem der vorhergehenden Ansprüche, **dadurch gekennzeichnet, dass** die Stützlänge (I) in Kraftrichtung angeordnet ist.

40. Vakuumpumpe nach einem der vorhergehenden Ansprüche, **dadurch gekennzeichnet, dass** die Seitenwände (46) parallel zur Teilwand (48) des Antriebsegments (45a) angeordnet sind.

41. Vakuumpumpe nach einem der vorhergehenden Ansprüche, **dadurch gekennzeichnet, dass** der Rotor aus Kunststoff bis 80 Grad Celsius dauerfest ausgelegt ist.

42. Vakuumpumpe nach einem der vorhergehenden Ansprüche, **dadurch gekennzeichnet, dass** der Rotor aus einem Kunststoff gebildet ist, der mindestens bis zu 140 Grad Celsius und darüber seine Festigkeitseigenschaften, zumindest im Wesentlichen, nicht verliert.

## Claims

1. A vacuum pump, especially for servo brake systems in motor vehicles, with a drivable rotor (1) via which a blade in a housing can be put in rotation, which rotor (1) consists of plastic and is designed in one piece, **characterized in that** the rotor (1) has at least one drive surface (43) located on a drive segment (45A, 45B) arranged on the drive side front surface (24) of the rotor (1) and running at an interval from the axis of rotation of the rotor (1).

2. A vacuum pump according to Claim 1, **characterized in that** the rotor (1), that is preferably manufactured using the injection molding process, has at least one hollow chamber (23) open on the edge.

3. A vacuum pump according to Claim 2, **characterized in that** the hollow chamber (23, 23A, 23B, 23C) is preferably introduced from the drive side face side (17) of the rotor (1) or from its face side (5) facing away from the drive.

4. A vacuum pump according to any one of the preceding claims, **characterized in that** the rotor (1) has at least two hollow chambers (23, 23A, 23B, 23C), each of which are introduced from a face side (5, 17) of the rotor (1), and that the rotor (1) has at least one closed wall that runs transversely or substantially transversely to the longitudinal central axis (29) of the rotor (1) and separates the hollow chambers (23, 23A, 23B, 23C) from each other in the axial direction.

5. A vacuum pump according to Claim 4, **characterized in that** hollow chambers (23, 23A, 23B, 23C) extend in the axial direction up to and into the middle area of the rotor (1).

6. A vacuum pump according to any one of the preceding claims, **characterized in that** the walls of the rotor (1) have a small thickness.

7. A vacuum pump according to any one of the preceding claims, **characterized in that** the transition between two wall areas of the rotor (1) that have differing thicknesses is steady, preferably continuous.

8. A vacuum pump according to any one of the preceding claims, **characterized in that** the rotor (1) comprises at least one bearing (13, 21) whose diameter is smaller, preferably only slightly smaller than the rotor diameter in the area of a slot (3) in which the blade can be shifted.

9. A vacuum pump according to any one of Claims 1 to 7, **characterized in that** the rotor (1) comprises at least one bearing (21) whose diameter is as large as the rotor diameter in the area of a slot (3) in which the blade can be shifted.

10. A vacuum pump according to any one of the preceding claims, **characterized in that** the rotor (1) comprises two bearings (13, 21), and that the diameter of at least one of the bearings (21, 13) is smaller, preferably substantially smaller than the rotor diameter in the area of the slot (3).

11. A vacuum pump according to any one of the preceding claims, **characterized in that** the rotor (1) comprises two bearings (13, 21), and that the diameter of the bearing (21) is smaller than the diameter of the bearing (13).

12. A vacuum pump according to any one of the preceding claims, **characterized in that** the rotor (1) comprises at least two adjacent hollow chambers (23A, 23B, 23C) separated from each other by a rib (31).

13. A vacuum pump according to any one of the preceding claims, **characterized in that** the shape of the hollow chambers (23A, 23B, 23C) is oval.

14. A vacuum pump according to Claim 12, **characterized in that** the rib (31) is thinner than the other wall areas of the rotor (1).

15. A vacuum pump according to any one of the preceding claims, **characterized in that** the rotor (1) can be loaded with a torque via a coupling (35) formed by a disk (37).

16. A vacuum pump according to any one of the preceding claims, **characterized in that** the ratio between the thickness (b) and the diameter (d) of the disk (37) is in a range of 0.1 ≤ b/d ≤ 0.3.

17. A vacuum pump according to any one of the preceding claims, **characterized in that** an opposite surface (43) for a coupling is located on a drive segment (45A, 45B) projecting over the drive side front surface of the rotor (1).

18. A vacuum pump according to Claim 17, **characterized in that** the ratio between the support length (I) of the drive segment (45A, 45B) and the diameter (D) of the rotor (1) is in a range of 0.35 ≤ I/D ≤ 0.65.

19. A vacuum pump according to any one of the preceding claims, **characterized in that** at least two drive segments (45A, 45B) are provided that are connected to each other by a closed ring (47).

20. A vacuum pump according to any one of the preceding claims, **characterized in that** the ring (47) can also be used as a bearing, especially as a slide bearing for the rotor.

21. A vacuum pump according to any one of the preceding claims, **characterized in that** the coupling comprises an oblong hole (39) into which a drive shaft engages or comprises a drive pin, preferably a pivot with cheeks (49), that engages in a corresponding slot in the drive shaft.

22. A vacuum pump according to any one of the preceding claims, **characterized in that** a first longitudinal section (7) of the rotor (1), which section is preferably designed as a pivot with cheeks (9), is provided with a cup-shaped cap (51) preferably consisting of metal sheeting.

23. A vacuum pump according to any one of the preceding claims, **characterized in that** the rotor (1) comprises an elastic drive element (57) cooperating with a drive shaft.

24. A vacuum pump according to any one of the preceding claims, **characterized in that** the drive element (57) consists of metal sheeting, preferably spring steel sheeting.

25. A vacuum pump according to any one of the preceding claims, **characterized in that** the drive element extends into a slot (69) in the drive shaft (71) and is guided in such a manner that it can shift in this slot.

26. A vacuum pump according to any one of the preceding claims, **characterized in that** the drive element engages in a slotted recess (61) in the rotor.

27. A vacuum pump according to Claim 26, **characterized in that** the drive element (57) is immovably held in the recess (61).

28. A vacuum pump according to any one of the preceding claims 1 to 25, **characterized in that** the drive element (57) is embedded in the rotor (1).

29. A vacuum pump according to any one of the preceding claims, **characterized in that** the drive element (57) is U-shaped.

30. A vacuum pump according to any one of the preceding claims, **characterized in that** when the drive element (57) is loaded with a torque, it rests on at least one section (stop face (77)) of the recess (61).

31. A vacuum pump according to Claim 28, **characterized in that** the drive element (57) is designed in a spherical manner in the contact area.

32. A vacuum pump according to any one of the preceding claims, **characterized in that** the rotor comprises at least one stop for the drive element.

33. A vacuum pump according to any one of the preceding claims, **characterized in that** the drive element is bent on its end that engages into the recess in the rotor.

34. A vacuum pump according to any one of the preceding claims, **characterized in that** the rotor (1) can be driven with the aid of the internal combustion engine of a motor vehicle and/or by a motor, especially an electric motor.

35. A vacuum pump according to any one of the preceding claims, **characterized in that** the rotor comprises at least one continuous slot for a blade.

36. A vacuum pump according to any one of the preceding claims, **characterized in that** the outer surface of the rotor is cylindrical.

37. A vacuum pump according to any one of the preceding claims, **characterized in that** the bearing/bearings is/are designed as slide bearing/bearings.

38. A vacuum pump according to any one of the preceding claims, **characterized in that** the coupling is arranged with play between the segments.

39. A vacuum pump according to any one of the preceding claims, **characterized in that** the support length (I) is arranged in the force direction.

40. A vacuum pump according to any one of the preceding claims, **characterized in that** the side walls (46) are arranged parallel to the partial wall (48) of the drive segment (45a).

41. A vacuum pump according to any one of the preceding claims, **characterized in that** the rotor made of plastic is fatigue-free up to 80 degrees Celsius.

42. A vacuum pump according to any one of the preceding claims, **characterized in that** the rotor is formed from a plastic that does not lose, at least substantially, its strength properties at least up to 140 degrees Celsius and above.

## Revendications

1. Pompe à vide, en particulier pour les installations de servofreins dans les véhicules automobiles, avec un rotor (1) entraînable par l'intermédiaire duquel une aile dans un boîtier peut être mise en rotation, étant donné que le rotor (1) est fabriqué en matière plastique et conçu en une seule pièce, **caractérisée en ce que** le rotor (1) présente au moins une surface d'entraînement (43) qui se trouve sur un segment d'entraînement (45A;45B) disposé à la face terminale (24) côté entraînement du rotor (1) et s'étend à une certaine distance de l'axe de rotation du rotor (1).

2. Pompe à vide selon la revendication 1, **caractérisée en ce que** le rotor (1), fabriqué de préférence selon le procédé de moulage par injection, présente au moins un espace creux (23) ouvert sur les bords.

3. Pompe à vide selon la revendication 2, **caractérisée en ce que** l'espace creux (23,23A,23B,23C) est créé de préférence par la face terminale (17) côté entraînement du rotor (1) ou par la face terminale (5) de ce dernier du côté opposé à l'entraînement.

4. Pompe à vide selon l'une quelconque des revendications précédentes, **caractérisée en ce que** le rotor (1) présente au moins deux espaces creux (23,23A,23B,23C) qui sont créés chacun d'une face terminale (5, 17) du rotor (1), et **en ce que** le rotor (1) présente au moins une paroi fermée transversale ou essentiellement transversale à l'axe central longitudinal (29) du rotor (1) qui sépare les espaces creux (23,23A,23B,23C) l'un de l'autre dans le sens axial.

5. Pompe à vide selon la revendication 4, **caractérisée en ce que** les espaces creux (23,23A,23B,23C) s'étendent dans le sens axial jusque dans la zone centrale du rotor (1).

6. Pompe à vide selon l'une quelconque des revendications précédentes, **caractérisée en ce que** les parois du rotor (1) ont une faible épaisseur.

7. Pompe à vide selon l'une quelconque des revendications précédentes, **caractérisée en ce que** la transition entre deux zones de paroi du rotor (1) ayant chacune une épaisseur différente est constante, de préférence continue.

8. Pompe à vide selon l'une quelconque des revendications précédentes, **caractérisée en ce que** le rotor (1) présente au moins un palier (13, 21) dont le diamètre est plus petit, de préférence seulement légèrement plus petit que le diamètre du rotor au niveau d'une fente (3) dans laquelle l'aile peut être déplacée.

9. Pompe à vide selon l'une quelconque des revendications 1 à 7, **caractérisée en ce que** le rotor (1) présente au moins un palier (21) dont le diamètre est égal au diamètre du rotor au niveau d'une fente (3) dans laquelle l'aile peut être déplacée.

10. Pompe à vide selon l'une quelconque des revendications précédentes, **caractérisée en ce que** le rotor (1) présente deux paliers (13, 21) et **en ce que** le diamètre d'au moins un des paliers (21, 13) est plus petit, de préférence considérablement plus petit que le diamètre du rotor au niveau de la fente (3).

11. Pompe à vide selon l'une quelconque des revendications précédentes, **caractérisée en ce que** le rotor (1) présente deux paliers (13, 21) et **en ce que** le diamètre du palier (21) est plus petit que le diamètre du palier (13).

12. Pompe à vide selon l'une quelconque des revendications précédentes, **caractérisée en ce que** le rotor (1) présente au moins deux espaces creux (23A;23B;23C) disposés l'un à côté de l'autre qui sont séparés l'un de l'autre par une nervure (31).

13. Pompe à vide selon l'une quelconque des revendications précédentes, **caractérisée en ce que** la forme des espaces creux (23A;23B;23C) est ovale.

14. Pompe à vide selon la revendication 12, **caractérisée en ce que** la nervure (31) est plus mince que les autres zones de paroi du rotor (1).

15. Pompe à vide selon l'une quelconque des revendications précédentes, **caractérisée en ce que** un couple peut être appliqué au rotor (1) par l'intermédiaire d'un accouplement (35) formé par un disque (37).

16. Pompe à vide selon l'une quelconque des revendications précédentes, **caractérisée en ce que** le rapport entre l'épaisseur (b) et le diamètre (d) du disque (37) est dans la plage 0,1 ≤ b/d ≤ 0,3.

17. Pompe à vide selon l'une quelconque des revendications précédentes, **caractérisée en ce que** une surface opposée (43) pour un accouplement se trouve sur un segment d'entraînement (45A;45B) qui fait saillie de la face terminale côté entraînement du rotor (1).

18. Pompe à vide selon la revendication 17, **caractérisée en ce que** le rapport entre la longueur d'appui (I) du segment d'entraînement (45A;45B) et le diamètre (D) du rotor (1) est dans la plage 0,35 ≤ I/D ≤ 0,65.

19. Pompe à vide selon l'une quelconque des revendications précédentes, **caractérisée en ce que** au moins deux segments d'entraînement (45A;45B) reliés l'un avec l'autre par un anneau fermé (47) sont prévus.

20. Pompe à vide selon l'une quelconque des revendications précédentes, **caractérisée en ce que** l'anneau (47) peut également être utilisé comme palier, en particulier comme palier à glissement pour le rotor.

21. Pompe à vide selon l'une quelconque des revendications précédentes, **caractérisée en ce que** l'accouplement présente un trou oblong (39) dans lequel prend un arbre d'entraînement ou un tourillon d'entraînement, de préférence un dièdre (49) qui prend dans une fente correspondante dans l'arbre d'entraînement.

22. Pompe à vide selon l'une quelconque des revendications précédentes, **caractérisée en ce que** une première tranche longitudinale (7) formée de préférence comme dièdre (9) du rotor (1) est dotée d'un capuchon (51) en forme de pot de préférence en tôle.

23. Pompe à vide selon l'une quelconque des revendications précédentes, **caractérisée en ce que** le rotor (1) présente un élément d'entraînement (57) élastique qui concourt avec un arbre d'entraînement.

24. Pompe à vide selon l'une quelconque des revendications précédentes, **caractérisée en ce que** l'élément d'entraînement (57) est en tôle métallique, de préférence en tôle élastique à ressorts.

25. Pompe à vide selon l'une quelconque des revendications précédentes, **caractérisée en ce que** l'élément d'entraînement fait saillie dans une fente (69) dans l'arbre d'entraînement (71) et est conduit dans ce dernier de manière déplaçable.

26. Pompe à vide selon l'une quelconque des revendications précédentes, **caractérisée en ce que** l'élément d'entraînement prend dans une excavation (61) en forme de fente dans le rotor.

27. Pompe à vide selon la revendication 26, **caractérisée en ce que** l'élément d'entraînement (57) est maintenu de manière fixe dans l'excavation (61).

28. Pompe à vide selon l'une quelconque des revendications 1 à 25, **caractérisée en ce que** l'élément d'entraînement (57) est encastré dans le rotor (1).

29. Pompe à vide selon l'une quelconque des revendications précédentes, **caractérisée en ce que** l'élément d'entraînement (57) est conçu en forme de U.

30. Pompe à vide selon l'une quelconque des revendications précédentes, **caractérisée en ce que**, lorsqu'un couple est appliqué sur l'élément d'entraînement (57), ce dernier repose sur au moins une tranche (surface de butée (77)) de l'excavation (61).

31. Pompe à vide selon la revendication 28, **caractérisée en ce que** l'élément d'entraînement (57) est bombé au niveau de la surface de contact.

32. Pompe à vide selon l'une quelconque des revendications précédentes, **caractérisée en ce que** le rotor présente au moins une butée pour l'élément d'entraînement.

33. Pompe à vide selon l'une quelconque des revendications précédentes, **caractérisée en ce que** l'élément d'entraînement est coudé à son extrémité qui prend dans l'excavation dans le rotor.

34. Pompe à vide selon l'une quelconque des revendications précédentes, **caractérisée en ce que** le rotor (1) peut être entraîné à l'aide du moteur à combustion interne d'un véhicule automobile et/ou par un moteur, en particulier un moteur électrique.

35. Pompe à vide selon l'une quelconque des revendications précédentes, **caractérisée en ce que** le rotor présente au moins une fente continue pour une aile.

36. Pompe à vide selon l'une quelconque des revendications précédentes, **caractérisée en ce que** la surface extérieure du rotor a une forme cylindrique.

37. Pompe à vide selon l'une quelconque des revendications précédentes, **caractérisée en ce que** le (les) paliers est (sont) conçus comme palier (paliers) à glissement.

38. Pompe à vide selon l'une quelconque des revendications précédentes, **caractérisée en ce que** l'accouplement est disposé avec un jeu entre les segments.

39. Pompe à vide selon l'une quelconque des revendications précédentes, **caractérisée en ce que** la longueur d'appui (I) est disposée dans le sens de la force.

40. Pompe à vide selon l'une quelconque des revendications précédentes, **caractérisée en ce que** les parois latérales (46) sont disposées parallèlement à la paroi partielle (48) du segment d'entraînement (45a).

41. Pompe à vide selon l'une quelconque des revendications précédentes, **caractérisée en ce que** le rotor en matière plastique est conçu pour résister à la fatigue jusqu'à 80 degrés Celsius.

42. Pompe à vide selon l'une quelconque des revendications précédentes, **caractérisée en ce que** le rotor est fabriqué en une matière plastique qui ne perd tout au moins essentiellement pas ses propriétés de résistance au moins jusqu'à 140 degrés Celsius et au-delà.
